# EUROPEAN PATENT APPLICATION

(11) **EP 2 629 464 A1**
(43) Date of publication of application: **21.08.2013**
(21) Application number: 11832506.7
(22) Date of filing: 11.10.2011
(51) Int. Cl.: H04L 12/56

(54) **COMMUNICATION SYSTEM, CONTROL DEVICE, METHOD FOR SETTING PROCESSING RULES, AND PROGRAM**

(30) Priority: 14.10.2010 JP 2010231635
(71) Applicant: NEC Corporation, Tokyo 108-8001 (JP)
(72) Inventor: KOJIMA, Eiichirou, Tokyo 108-8001 (JP)
(74) Representative: Vossius & Partner
(86) International application number: PCT/JP2011/073294
(87) International publication number: WO 2012/050071

(57) **Abstract**

Both load balancing and ensuring of redundancy for an entire network, and load balancing and ensuring of redundancy for a specified link are provided. A communication system includes: a plurality of nodes provided with a packet processing unit that processes a received packet in accordance with a processing rule associating a process to be applied to a packet and a matching rule for identifying a packet to which the process is to be applied; a trunk port management unit that manages a trunking link in a network including the nodes; and a path control unit that determines whether or not to use the trunking link, in accordance with a characteristic of a packet for which a setting of a processing rule is requested by a given node, and in a case of using the trunking link, selects some trunking link according to a prescribed rule. The control device calculates a packet forwarding path including the selected link, and sets a processing rule to implement the packet forwarding path for nodes on the packet forwarding path.

## Description

### TECHNICAL FIELD

### (REFERENCE TO RELATED APPLICATION)

The present application is based upon and claims the benefit of the priority of Japanese patent application No. 2010-231635 filed on October 14, 2010, the disclosure of which is incorporated herein in its entirety by reference thereto.
The present invention relates to a communication system, a control device, a method for setting processing rules, and a program, and in particular to a communication system including nodes that perform forwarding of received packets in accordance with a processing rule that associates a process to be applied to a packet and a matching rule for identifying a packet to which the processing is to be applied, a control device, a node control method, and a program.

### BACKGROUND

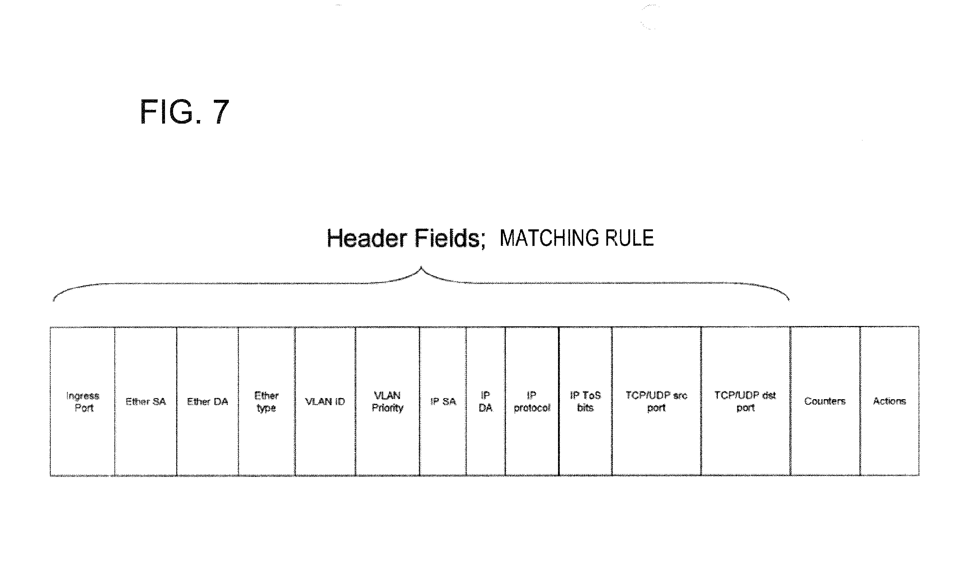

Recently, a network architecture known as OpenFlow has been attracting attention (Patent Literature 1 and Non Patent Literatures 1 and 2). In OpenFlow, communication is taken as end-to-end flow, and path control, failure recovery, load balancing, and optimization are performed on a per-flow basis. An OpenFlow switch functioning as a relay device has a secure channel for communication with an OpenFlow controller positioned as a control device, and operates according to a flow table to which information is added and whose content is rewritten as necessary, according to an instruction from the OpenFlow controller. In the flow table, a set of the following is defined for each flow: matching rule (Header fields) against which a packet header is matched, flow statistical information (Counters), and actions (Actions) that define processing content to be applied to a packet matching a matching rule (Header fields) (see FIG. 7).

For example, when a packet is received, the OpenFlow switch searches the flow table for an entry that has a matching rule (refer to the header fields in FIG. 7) that matches header information of the received packet. If an entry matching the received packet is found as a result of the search, the OpenFlow switch updates the flow statistical information (Counter) and also implements processing content (packet transmission from a specified port, flooding, dropping, and the like) described in an Actions field of the entry in question, for the received packet. On the other hand, if an entry matching the received packet is not found as a result of the search, the OpenFlow switch forwards the received packet to the OpenFlow controller via a secure channel, requests determination of a path of the packet based on a transmission source and destination of the received packet, receives a flow entry realizing this, and updates the flow table. In this way, the OpenFlow switch uses the entry stored in the flow table as a processing rule to perform packet forwarding.

Patent Literature 2 and Non Patent Literature 3 describe a link aggregation technique known as trunking, link aggregation, or the like. These are also known as port trunking, bonding, teaming, etc. according to functional naming of respective company devices by vendors of various network devices. In all cases, multiple links in the same segment are treated as one virtual link, and redundancy (improvement in availability), load balancing, and parallelization are carried out. Below, techniques of collecting multiple links in the same segment to treat them as one virtual link are generically called "trunking", and a port connected to a trunking link is known as a "trunk port".

Patent Literature 3 discloses a configuration provided with a transmission-reception unit which, in a bridged network configured by a plurality of switches that respectively support a multiple spanning tree protocol, when the respective switches receive a frame having an individual destination address from a terminal side, sends an enquiry frame to a destination terminal of the relevant individual address via the default spanning tree, and also, when the enquiry frame is received, if the relevant destination terminal is connected, sends an enquiry response frame to all spanning trees; and an optimal path selection processing unit that selects an optimal spanning tree based on information in response frames from all the spanning trees.

### CITATION LIST

### PATENT LITERATURE

[PTL 1]
   PCT International Publication No. WO 2008/095010
[PTL 2]
   Japanese Patent Publication No. JP 3792707 B
[PTL 3]
   Japanese Patent Kokai Publication No. JP2003-87290A

### NON PATENT LITERATURE

[NPL 1]
   Nick McKeown and seven others, "OpenFlow: Enabling Innovation in Campus Networks", [online], [Searched on September 6, 2010], Internet <URL: http://www.openflowswitch.org//documents/openflow-wp-lates.pdf>
[NPL 2]
   "Openflow Switch Specification" Version 1.0.0. (Wire Protocol 0x01) [Searched on September 6, 2010], Internet <URL: http://www.openflowswitch.org/documents/openflow-spec-v1.0.0.pdf>
[NPL 3]
   IEEE Standard 802.3ad, Aggregation of Multiple Link Segments, 2000.

### SUMMARY

### TECHNICAL PROBLEM

The disclosures of Patent Literatures 1 to 3 and Non Patent Literatures 1 to 3 given above are incorporated in their entirety by reference into this specification. The following analysis is given according to the present invention. In the OpenFlow architecture of Patent Literature 1 and Non Patent Literatures 1 and 2, OpenFlow switches under the control of a control device (OpenFlow controller) are handled as one huge switch, so that overall it is possible to realize load balancing and to ensure redundancy, but there is a problem in that consideration is not given to load balancing and ensuring of redundancy in specified links between a host and an OpenFlow switch, and between OpenFlow switches.

In the trunking of Patent Literatures 2 and 3, and Non Patent Literature 3, as described above, load balancing and ensuring of redundancy are performed between a plurality of links in the same segment, but there is a problem of not being able to handle a case where a load increase or a failure occurs in a device in the segment in question.

The present invention has been made in view of the abovementioned situation, and it is an object thereof to provide a communication system, a control device, a method for setting processing rules, and a program, in which it is possible to provide both load balancing and to ensuring of redundancy (improvement in availability) for an entire network as described above, and load balancing and ensuring of redundancy for a specified link.

### SOLUTION TO PROBLEM

According to a first aspect of the present invention, there is provided a communication system characterized by comprising: a plurality of nodes provided with a packet processing unit that processes a received packet in accordance with a processing rule associating a process to be applied to a packet and a matching rule for identifying a packet to which the process is to be applied; a trunk port management unit that manages a trunking link in a network including the nodes; and a path control unit that determines whether or not to use the trunking link, in accordance with a characteristic of a packet for which a setting of a processing rule is requested by a given node, and in a case of using the trunking link, selects any trunking link according to a prescribed rule; and including a control device that calculates a packet forwarding path including the selected link, based on topology of the network, and sets a processing rule to implement the packet forwarding path for a node in the packet forwarding path.

According to a second aspect of the present invention, there is provided a control device, connected to a plurality of nodes provided with a packet processing unit that processes a received packet in accordance with a processing rule associating a process to be applied to a packet and a matching rule for identifying a packet to which the process is to be applied, the control device comprising: a trunk port management unit that manages a trunking link in a network including the nodes; and a path control unit that determines whether or not to use the trunking link, in accordance with a characteristic of a packet for which a setting of a processing rule is requested by a given node, and in a case of using a trunking link, selects any trunking link according to a prescribed rule; wherein a packet forwarding path including the selected link is calculated, based on topology of the network, and a processing rule to implement the packet forwarding path is set for nodes in the packet forwarding path.

According to a third aspect of the present invention, there is provided a method of setting a processing rule in a communication system including a plurality of nodes provided with a packet processing unit that processes a received packet in accordance with a processing rule associating a process to be applied to a packet and a matching rule for identifying a packet to which the process is to be applied; and a control device comprising a trunk port management unit that manages a trunking link in a network including the nodes; the method comprising: a step of determining whether or not to use the trunking link, in accordance with a characteristic of a packet for which a setting of a processing rule is requested by a given node; a step, in a case of using the trunking link, of selecting any trunking link according to a prescribed rule; and a step of calculating a packet forwarding path including the selected link, based on topology of the network, and setting a processing rule to implement the packet forwarding path for nodes on the packet forwarding path. This method is associated with a particular machine known as a control device that controls the plurality of nodes.

According to a fourth aspect of the present invention, there is provided a program to be executed in a control device connected to a plurality of nodes provided with a packet processing unit that processes a received packet in accordance with a processing rule associating a process to be applied to a packet and a matching rule for identifying a packet to which the process is to be applied, and provided with a trunk port management unit that manages a trunking link in a network including the nodes; the program executing: a process of determining whether or not to use the trunking link, in accordance with a characteristic of a packet for which a setting of a processing rule is requested by a given node; a process, in a case of using the trunking link, of selecting any trunking link according to a prescribed rule; and a process of calculating a packet forwarding path including the selected link, based on topology of the network, and setting a processing rule to implement the packet forwarding path for nodes on the packet forwarding path. This program may be recorded on a computer-readable storage medium. That is, the present invention may be embodied as a computer program product.

### ADVANTAGEOUS EFFECTS OF INVENTION

According to the present invention, it is possible to provide load balancing and ensuring of redundancy for an entire network, and load balancing and ensuring of redundancy for a specified link.

### BRIEF DESCRIPTION OF THE DRAWINGS

FIG. 1 is a diagram for describing an outline of the present invention.
   FIG. 2 is a diagram representing a configuration of a first exemplary embodiment of the invention.
   FIG. 3 is an example of a table held in a trunk port management unit in the first exemplary embodiment of the invention.
   FIG. 4 is another example of a table held in a trunk port management unit in the first exemplary embodiment of the invention.
   FIG. 5 is a sequence diagram for describing operation of the first exemplary embodiment of the present invention.
   FIG. 6 is a sequence diagram for describing operation of a second exemplary embodiment of the present invention.
   FIG. 7 is a diagram representing a flow entry configuration as described in Non Patent Literature 2.

### DESCRIPTION OF EMBODIMENTS

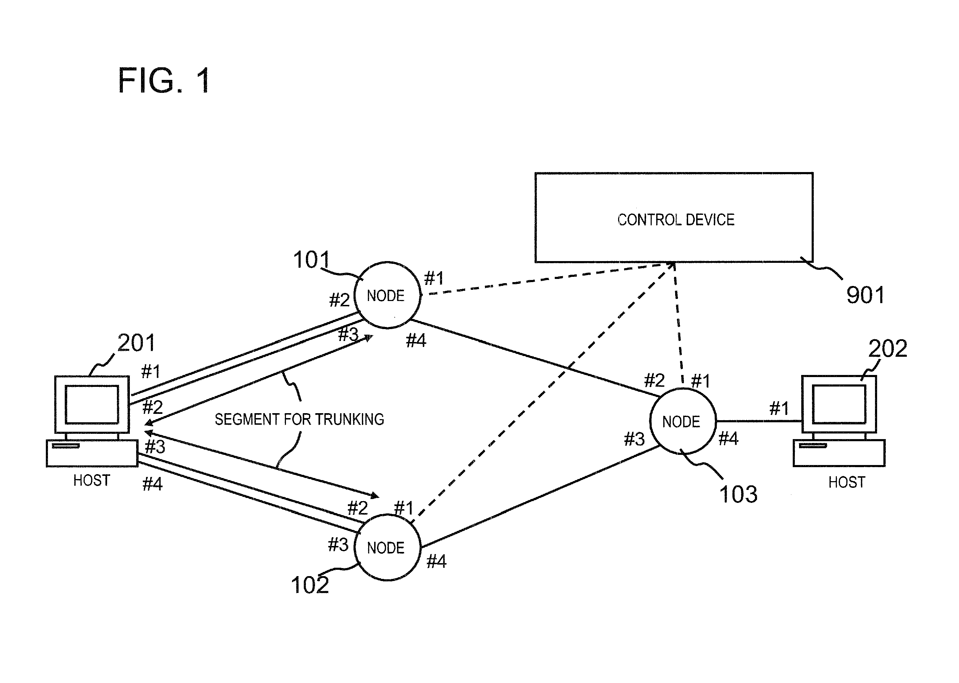

First a description is given concerning an outline of an exemplary embodiment of the present invention. The present invention, in the exemplary embodiment thereof, as shown in FIG. 1, can be realized by a plurality of nodes 101 to 103, arranged between hosts 201 and 202, and provided with a packet processing unit that processes a received packet in accordance with a processing rule associating a process to be applied to a packet and a matching rule for identifying a packet to which the process is to be applied, and a control device 901 that controls these nodes. It is to be noted that reference symbols in the drawings attached to this outline are added for convenience to respective elements as an example in order to aid understanding and are not intended to limit the invention to modes shown in the drawings.

In the following, a description is given in which 2 links are trunked respectively between a host 201 and node 101, and between the host 201 and node 102 (see "segment for trunking" in FIG. 1). Below, a description is given in which the host 202 transmits a packet having a destination of the host 201.

The node 103 that receives a packet from the host 202 transmits information of the received packet or the packet itself to the control device 901, and inquires as to which of the nodes 101 and 102 transmission should be made to.

The control device 901 that receives the inquiry firstly judges whether or not the packet related to the inquiry should be forwarded via the trunking link. In the example of FIG. 1, since all links between the host 201 and the nodes 101 and 102 are trunked, the control device 901 selects one link from among the abovementioned trunking links by using the prescribed link selection reference, and calculates a packet forwarding path including the link in question. For example, in a case where, among the segments for trunking in FIG. 1, port #1 of the host 201 and port #2 of the node 101 are selected, a packet forwarding path is calculated that outputs a packet in the order of port #2 of the node 103 and port #2 of the node 101.

The control device 901 creates a processing rule to cause the node 103 to output a received packet and following packets from port #2, along the packet forwarding path, and sets the processing rule in the node 103. In the same way, the control device 901 creates a processing rule to cause the node 101 to output a packet received from the node 103 and following packets from port #2, along the packet forwarding path, and sets the processing rule in the node 101.

When processing rules are set in each of the nodes 103 and 101 in the packet forwarding path, it is possible to forward a packet transmitted from the host 202 with a destination of the host 201 and following packets, along the packet forwarding path. Thereafter, giving consideration to the load state of links between port #1 of the host 201 and port #2 of the node 101, by the control device 901 performing a switching operation to a link between port #2 of the host 201 and port #3 of the node 101 or a link via the node 102, load balancing is realized. Since for convenience there are 4 links between the host 201 and the nodes 101 and 102, a response is possible not only when there is any one trunk port failure of the node 101, but also when the node 101 itself fails, so that redundancy is adequately ensured.

### [First Exemplary Embodiment]

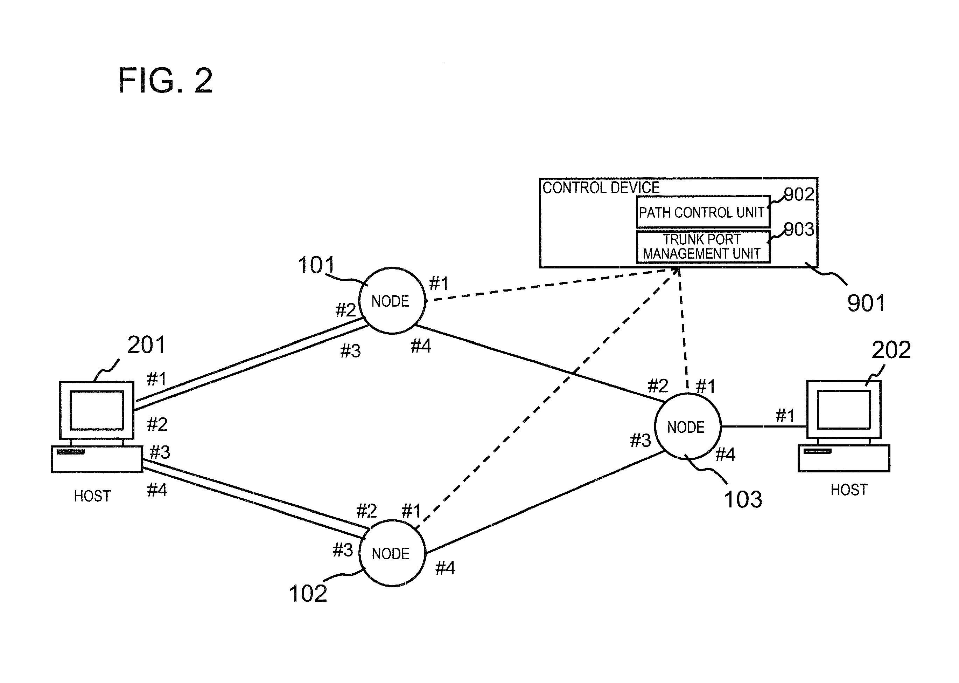

Next, a detailed description is given concerning a first exemplary embodiment of the present invention, making reference to the drawings. FIG. 2 is a diagram representing a configuration of the first exemplary embodiment of the present invention. FIG. 2 shows a configuration having an arrangement of nodes 101 to 103, arranged between hosts 201 and 202, which forward packets exchanged between the hosts 201 and 202, and a control device 901 provided with a path control unit 902 and a trunk port management unit 903.

In the example of FIG. 2, the host 201 is provided with four ports #1 to #4. Among these, ports #1 and #2 of the host 201 are connected to ports #2 and #3 of the node 101. Furthermore, ports #3 and #4 of the host 201 are connected to ports #2 and #3 of the node 102. Therefore, ports #1 to #4 of the host 201 can be used as trunk ports.

Port #4 of the node 101 is connected to port #2 the node 103, and port #4 of the node 102 is connected to port #3 the node 103. Port #1 of the nodes 101 to 103 is connected to a node connection port of the control device 901. Furthermore, port #1 of the host 202 is connected to port #4 of the node 103.

It is to be noted that for the abovementioned nodes 101 to 103, it is possible to use an OpenFlow switch of the Non Patent Literatures 1 and 2, which performs packet processing by being provided with a flow table storing flow entries equivalent to processing rules, or a network device that performs packet forwarding operations by using a processing rule (flow entry) similar to the OpenFlow switch. In the following description, the nodes 101 to 103 are described as an OpenFlow switch of the Non Patent Literatures 1 and 2.

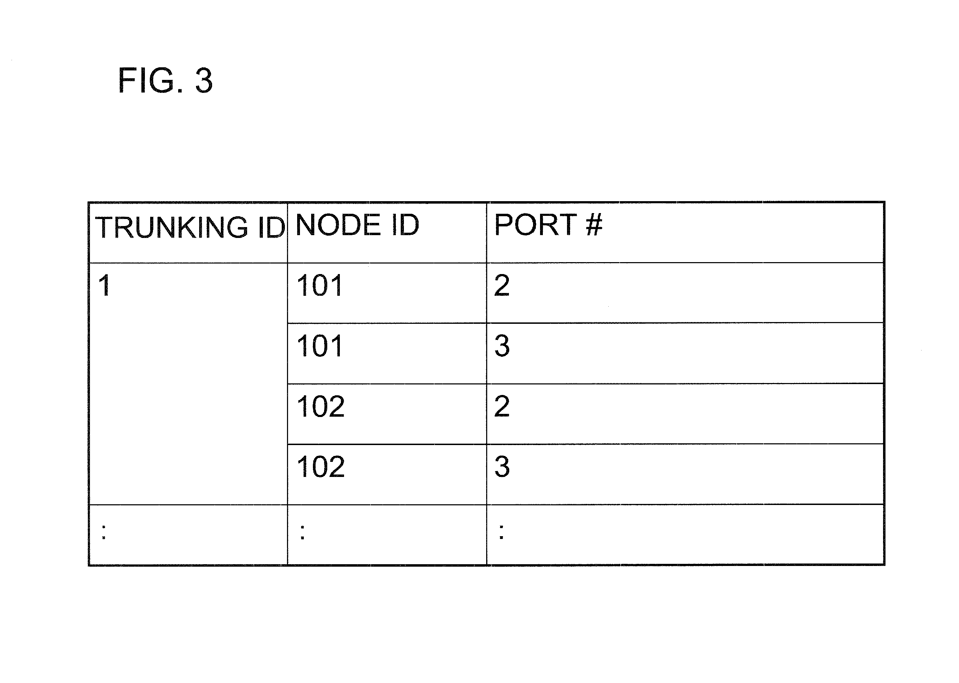

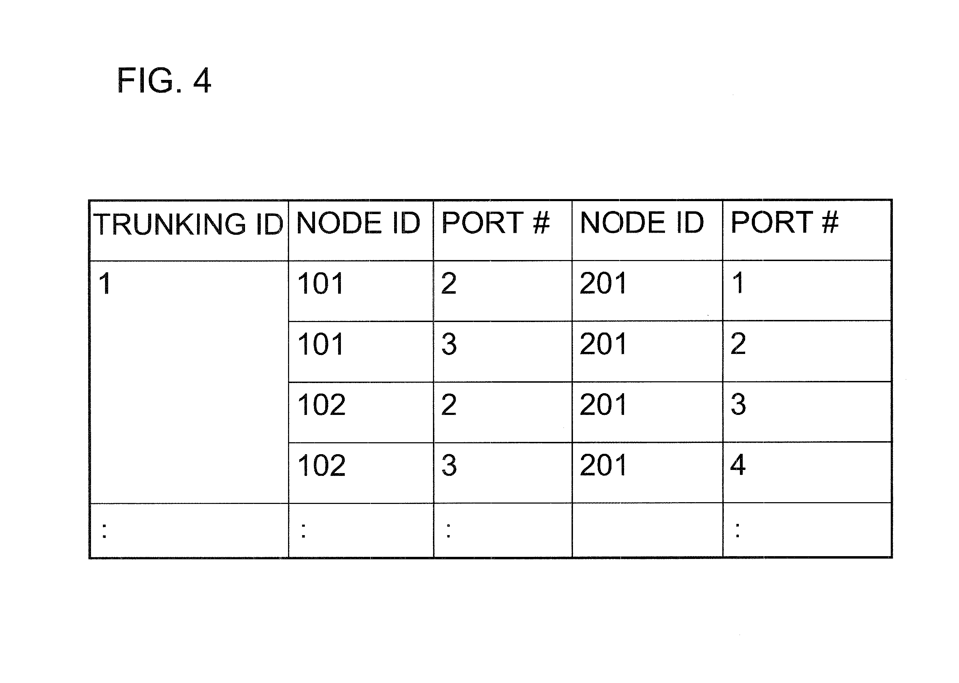

The trunk port management unit 903 of the control device 901 manages trunking links in the abovementioned type of network. The trunk port management unit 903 performs management by attaching trunking links to each other by using a table or the like, that stores links such as, for example, port #1 of the host 201 and port #2 of the node 101, port #2 of the host 201 and port #3 of the node 101, port #3 of the host 201 and port #2 of the node 102, and port #4 of the host 201 and port #3 of the node 102. FIG. 3 is an example of a table held in the trunk port management unit 903, and shows a mode in which ports on the host side are omitted, and trunk node IDs and port numbers are associated. FIG. 4 shows a mode where node IDs of both sides of trunking links are associated with port numbers, and in this example, port numbers on the host side are also described.

The path control unit 902 of the control device 901 holds configuration information (port information of respective nodes) of the nodes 101 to 103, and network topology information. On receiving a request to set a processing rule from the nodes 101 to 103, the path control unit 902 refers to the trunk port management unit 903, determines whether or not a port of a node that is a final output destination of a packet in question is a trunk port, and in a case of a trunk port, selects one link from among attached links using a predetermined link selection reference. In addition, the path control unit 902 of the control device 901 refers to the abovementioned network topology, calculates a packet forwarding path including the selected link, and sets a processing rule implementing the packet forwarding path for nodes on the packet forwarding path in question.

The above described type of control device 901 can be implemented by adding the trunk port management unit 903 to an OpenFlow controller of Non Patent Literatures 1 and 2, to cause operation as in the abovementioned path control unit 902. Furthermore, implementation is possible by a configuration in which the selected link is notified to the OpenFlow controller of Non Patent Literatures 1 and 2, and a packet forwarding path including the link in question is calculated, and a device is added to set a processing rule in a node in the packet forwarding path.

The abovementioned type of control device 901 can also be implemented by a computer program that executes the abovementioned respective processes on a computer configuring the control device 901, using hardware thereof.

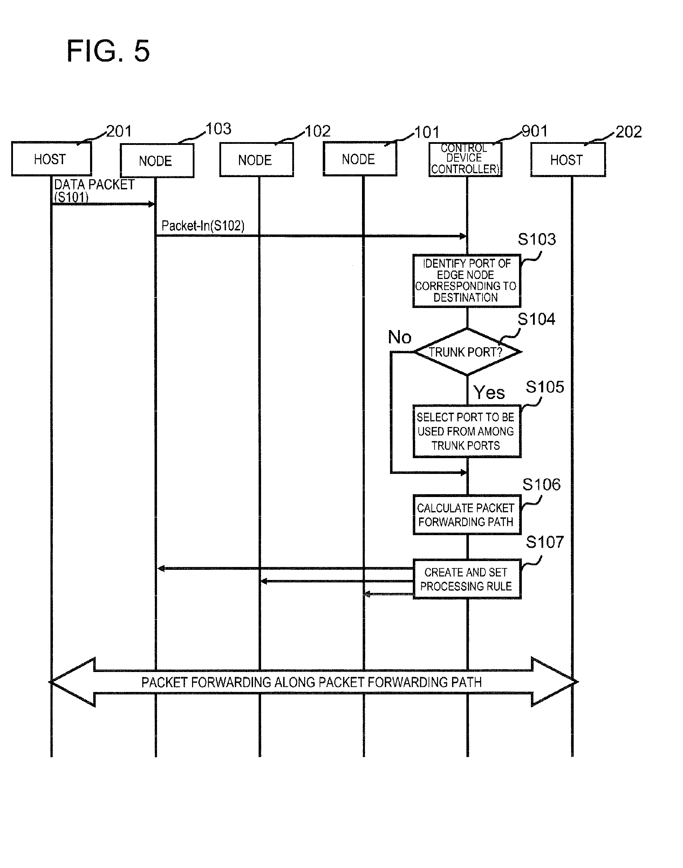

Next, a detailed description is given concerning operation of the present exemplary embodiment, making reference to FIG. 2 and FIG. 5. First, a description is given of a case where the host 202 transmits a packet with a destination of the host 201.

A data packet transmitted from the host 201 with a destination of the host 202 is inputted to port #4 of the node 103 that is connected to the host 201 (step S101 in FIG. 5).

The node 103 searches for a processing rule (flow entry) having a matching rule that matches the received data packet, from a flow table or the like inside its own storage device. Here, since the data packet received from the host 201 is the first packet (a packet that is unknown to the node 103), a processing rule (flow entry) that matches the data packet received from the host 201 cannot be found. Accordingly, the node 103 makes a request to the control device 901 to set a processing rule for processing the data packet in question and following data packets (step S102 "Packet-In" in FIG. 5).

The control device 901 that receives the request to set the processing rule refers to configuration information (connection relationships and the like of each port) of the nodes 101 to 103, and identifies a port (output port) of an edge node (a node connected to the host) corresponding to a destination of the packet in question (step S103 in FIG. 5). Here, port #2 of the node 101 is identified.

Next, the control device 901 refers to the trunk port management unit 903 to determine whether or not the identified port is a trunk port (step S104 in FIG. 5).

In a case where the identified port is a trunk port, the control device 901 selects a link (port) to be used, from among trunking links connected to the trunk port management unit 903 (step S105 in FIG. 5). Here, since port #2 of the node 101 is a trunk port, the control device 901 selects any among trunk ports, port #2 and port #3 of the node 101, and port #2 and port #3 of the node 102. Here, the control device 901 gives consideration to the load situation and the like, and selects port #3 of the node 102.

It is to be noted that as a result of the confirmation in step S104, in a case where the identified port is not a trunk port (No in step S104 of FIG. 5), the port identified in step S103 remains selected.

Next, the control device 901 calculates a packet forwarding path via the selected trunk port (or non-trunk port) (step S106 in FIG. 5). Here, in accordance with the selection result, a packet forwarding path is calculated that forwards a packet to the host 201 in the order of port #3 of the node 103 and port #3 of the node 102 of FIG. 2.

Next, the control device 901 creates a processing rule corresponding to the calculated packet forwarding path, and sets a processing rule in nodes on the packet forwarding path in question (step S107 of FIG. 5). Specifically, in the node 103 a processing rule is set to determine an action for outputting the packet in question from port #3, and in the node 102 a processing rule is set to determine an action for outputting the packet in question from port #3 (setting a processing rule is not necessary for the node 101).

From the above, a packet forwarded in step S101 and following packets, in consideration of the load situation and the like, are delivered to the host 202 via a selected trunk port (for example, port #3 of the node 102).

On the other hand, in a case where a packet is transmitted in an opposite direction with a destination of the host 202 from the host 201, processing in accordance with a sequence as in FIG. 5 is performed. In this case, by step S103 since port #4 of the node 103 is identified as an edge node and port corresponding to a destination, selection of a trunk port in step S105 is omitted.

Therefore, a packet with a destination of the host 202 from the host 201, with a start point of a port (ports #1 to #4 of the host 201) used when the host 201 transmits, is transmitted to the host 202 via either of the nodes 101 or 102, and then the node 103.

In this way, in an opposite direction also, it is possible to implement load balancing as appropriate by the host 201 selecting a trunk port.

Furthermore, when performing the abovementioned communication, where the trunk port of a node or the node itself fails, it is possible to continue communication by the control device 901 calculating a packet forwarding path by re-selecting the trunk port and re-setting the processing rule. With regard to the control device 901, an implementation is possible where, as a mechanism of detecting failure in the trunk port of a node or the node itself, the control device 901 periodically collects configuration information of the nodes 101 to 103, or the nodes 101 to 103 notify the control device of an irregularity in their own ports. Furthermore, timing at which a processing rule is re-set may be at the time of detection of failure of a trunk port of a node or of the node itself, or when a request to set a processing rule again is received.

According to the first exemplary embodiment of the present invention as described above, since a trunking link is set between one host and a plurality of nodes, it is possible to provide load balancing and ensuring of redundancy for the entire network, and load balancing and ensuring of redundancy for a specific link.

### [Second Exemplary Embodiment]

Next, a description is given concerning a second exemplary embodiment in which a modification is added to the first exemplary embodiment described above. The second exemplary embodiment of the present invention can be implemented with a similar configuration to the abovementioned first exemplary embodiment, and since there is a modification to operation, the description below is centered on points of difference therefrom.

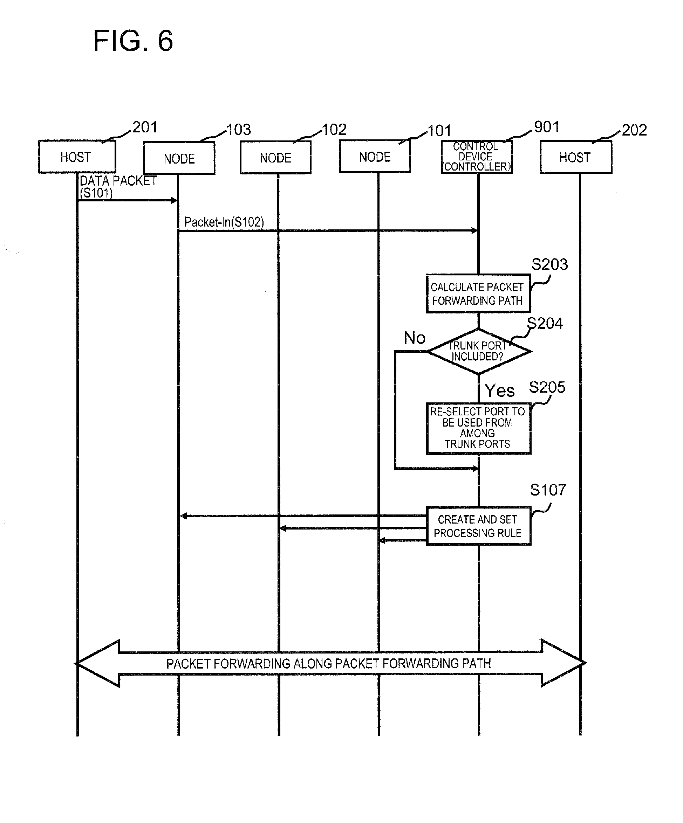

FIG. 6 is a sequence diagram for describing operation of the second exemplary embodiment of the present invention. Since a point of difference from FIG. 5, which represents a sequence in the first exemplary embodiment, is in operation of a control device 901 that receives a request to set a processing rule after step S203, a description is given below of step S203 and thereafter.

The control device 901 that receives a request to set a processing rule from a node 103 calculates a packet forwarding path going via a packet that has received the setting request, based on header information and the like of the packet (step S203 of FIG. 6).

Next, the control device 901 refers to a trunk port management unit 903, and confirms whether or not a trunk port is included in the packet forwarding path (step S204 in FIG. 6).

In a case where a trunk port is included in the packet forwarding path, the control device 901 selects a link (port) to be used, from among trunking links connected to the trunk port management unit 903 (step S205 in FIG. 6). For example, in place of port #2 of a node 101 on the initial packet forwarding path, an operation of selecting port #3 of a node 102 is possible.

It is to be noted that as a result of the confirmation in step S204, in a case where a trunk port is not included in the packet forwarding path (No is step S204 of FIG. 6), a packet forwarding path created in step S203 is used.

Next, the control device 901 creates a processing rule corresponding to the packet forwarding path, similar to the first exemplary embodiment, and sets a processing rule in nodes on the packet forwarding path in question (step S107 of FIG. 6).

As described above, the present invention can be implemented by a mode in which, in a case where a packet forwarding path is calculated in advance and a trunking link is included therein, re-selection of a trunking link is performed.

As described above, according to the present exemplary embodiment it is also possible to control use of links between given trunk nodes.

Descriptions have been given above of preferred exemplary embodiments of the present invention, but there is no limitation to the abovementioned exemplary embodiments, and further modifications, substitutions, and adjustments can be added within a scope that does not depart from a fundamental technological concept of the invention. For example, the number of hosts, nodes and control devices, and the number and location of trunking links, shown in the respective exemplary embodiments described above, are merely exemplary, and clearly no limitation to any thereof is intended.

In the abovementioned first and second exemplary embodiments, for example, a description was given citing examples of trunking between a host and an edge node, but it is possible to apply the present invention also to a case where a link between given nodes is trunked.

Finally, preferred modes of the present invention are summarized.

### <First Mode>

(See the communication system according to the abovementioned first aspect.)

### <Second Mode>

The communication system according to the first mode, wherein the control device further determines whether or not to use the trunking link according to whether or not an output port of a packet, for which a setting of a processing rule is requested by a given node, is a trunk port.

### <Third Mode>

The communication system according to the first or second mode, wherein the control device, in response to a load or a failure in the trunking link, performs an operation to switch a link in the packet forwarding path to another trunking link.

### <Fourth Mode>

The communication system according to any one of the first to third modes, wherein the control device determines whether or not to use a trunking link, based on information written to a prescribed field of a header of a packet for which a setting of a processing rule is requested by the given node.

### <Fifth Mode>

The communication system according to any one of the first to third modes, wherein the control device determines whether or not to use a trunking link, based on a transmission source or destination of a packet for which a setting of a processing rule is requested by the given node.

### <Sixth Mode>

(See the control device according to the abovementioned second aspect.)

### <Seventh Mode>

The control device according to the sixth mode, wherein the control device determines whether or not to use the trunking link according to whether or not an output port of a packet, for which a setting of a processing rule is requested by the given node, is a trunk port.

### <Eighth Mode>

The control device according to the sixth or seventh mode, wherein the control device, in response to a load or a failure in the trunking link, performs an operation to switch a link in the packet forwarding path to another trunking link.

### <Ninth Mode>

The control device according to any one of the sixth to eighth modes, wherein the control device determines whether or not to use a trunking link, based on information written to a prescribed field of a header of a packet for which a setting of a processing rule is requested by the given node.

### <Tenth Mode>

The control device according to any one of the sixth to eighth modes, wherein the control device determines whether or not to use a trunking link, based on a transmission source or destination of a packet for which a setting of a processing rule is requested by the given node.

### <Eleventh Mode>

(See the method of setting a processing rule according to the abovementioned third aspect.)

### <Twelfth Mode>

(See the program according to the abovementioned fourth aspect.)

It is to be noted that the abovementioned eleventh and twelfth modes can be expanded with regard to the second to fifth modes, similar to the first mode.
It is to be noted that the various disclosures of the abovementioned Patent Literatures 1 to 3 and the Non Patent Literatures 1 to 3 are incorporated herein by reference thereto. Modifications and adjustments of exemplary embodiments and examples are possible within the bounds of the entire disclosure (including the claims) of the present invention, and also based on fundamental technological concepts thereof. Furthermore, a wide variety of combinations and selections of various disclosed elements (including respective elements of the respective claims, respective elements of the respective exemplary embodiments, respective elements of the respective drawings, and the like) is possible within the claims of the present invention. That is, the present invention clearly includes every type of transformation and modification that a person skilled in the art can realize according to the entire disclosure including the claims and to technological concepts thereof.

### REFERENCE SIGNS LIST

- 101 to 104: nodes
- 201, 202: host
- 901: control device (controller)
- 902: path control unit
- 903: trunk port management unit

## Claims

1. A communication system, **characterized by** comprising:
a plurality of nodes provided with a packet processing unit that processes a received packet in accordance with a processing rule associating a process to be applied to a packet and a matching rule for identifying a packet to which said process is to be applied;
a trunk port management unit that manages a trunking link in a network including said nodes; and
a path control unit that determines whether or not to use said trunking link, in accordance with a characteristic of a packet for which a setting of a processing rule is requested by a given node, and in a case of using said trunking link, selects any trunking link according to a prescribed rule; and including
a control device that calculates a packet forwarding path including said selected link, based on topology of said network, and sets a processing rule to implement said packet forwarding path for a node in said packet forwarding path.

2. The communication system according to claim 1, wherein said control device determines whether or not to use said trunking link according to whether or not an output port of a packet, for which a setting of a processing rule is requested by said given node, is a trunk port.

3. The communication system according to claim 1 or 2, wherein said control device, in response to a load or a failure in said trunking link, performs an operation to switch a link in said packet forwarding path to another trunking link.

4. The communication system according to any one of claims 1 to 3, wherein said control device determines whether or not to use a trunking link, based on information written to a prescribed field of a header of a packet for which a setting of a processing rule is requested by said given node.

5. The communication system according to any one of claims 1 to 3, wherein said control device determines whether or not to use a trunking link, based on a transmission source or destination of a packet for which a setting of a processing rule is requested by said given node.

6. A control device, connected to a plurality of nodes provided with a packet processing unit that processes a received packet in accordance with a processing rule associating a process to be applied to a packet and a matching rule for identifying a packet to which said process is to be applied, said control device comprising:
a trunk port management unit that manages a trunking link in a network including said nodes; and
a path control unit that determines whether or not to use said trunking link, in accordance with a characteristic of a packet for which a setting of a processing rule is requested by a given node, and in a case of using a trunking link, selects some trunking link according to a prescribed rule; wherein
a packet forwarding path including said selected link is calculated based on topology of said network, and a processing rule to implement said packet forwarding path is set for a node in said packet forwarding path.

7. The control device according to claim 6, wherein a determination is made as to whether or not to use said trunking link according to whether or not an output port of a packet, for which a setting of a processing rule is requested by the given node, is a trunk port.

8. The control device according to claim 6 or 7, wherein, in response to a load or a failure in said trunking link, an operation to switch a link in said packet forwarding path to another trunking link is performed.

9. A method of setting a processing rule in a communication system including:
a plurality of nodes provided with a packet processing unit that processes a received packet in accordance with a processing rule associating a process to be applied to a packet and a matching rule for identifying a packet to which said process is to be applied; and
a control device comprising a trunk port management unit that manages a trunking link in a network including said nodes; said method comprising:
a step of determining whether or not to use said trunking link, in accordance with a characteristic of a packet for which a setting of a processing rule is requested by a given node;
a step, in a case of using said trunking link, of selecting any trunking link according to a prescribed rule; and
a step of calculating a packet forwarding path including said selected link, based on topology of said network, and setting a processing rule to implement said packet forwarding path for a node in said packet forwarding path.

10. A program to be executed in a control device connected to a plurality of nodes provided with a packet processing unit that processes a received packet in accordance with a processing rule associating a process to be applied to a packet and a matching rule for identifying a packet to which said process is to be applied, and provided with a trunk port management unit that manages a trunking link in a network including said nodes; said program executing:
a process of determining whether or not to use said trunking link, in accordance with a characteristic of a packet for which a setting of a processing rule is requested by a given node;
a process, in a case of using said trunking link, of selecting any trunking link according to a prescribed rule; and
a process of calculating a packet forwarding path including said selected link, based on topology of said network, and setting a processing rule to implement said packet forwarding path for a node in said packet forwarding path.
